# EUROPEAN PATENT APPLICATION

(11) **EP 4 692 893 A1**
(43) Date of publication of application: **11.02.2026**
(21) Application number: 24192818.3
(22) Date of filing: 05.08.2024
(51) Int. Cl.: G02B 26/00, G02B 26/08

(54) **MICRO-ELECTROMECHANICAL SYSTEM BASED MICRO CAVITY FOR COLOR CENTERS**

(71) Applicant: Nederlandse Organisatie voor toegepast- natuurwetenschappelijk onderzoek TNO, 2595 DA 's-Gravenhage (NL)
(72) Inventor: The designation of the inventor has not yet been filed
(74) Representative: Nederlandsch Octrooibureau

(57) **Abstract**

Micro-electromechanical system, MEMS, based micro cavity for color centers in a solid-state substrate comprising a MEMS structure, a first mirror, a solid-state substrate comprising an embedded color center; and a second mirror located opposite to the first mirror, wherein the solid-state substrate is located between the first mirror and the second mirror, at least one of the first mirror and the second mirror comprises a curved surface, and the MEMS structure comprises an actuator arranged to move the first mirror towards to or away from the second mirror to adjust a length of the micro cavity thereby controlling a resonance frequency of the micro cavity.

## Description

### FIELD OF THE INVENTION

The invention relates to a micro-electromechanical system, MEMS, based micro cavity for color centers in a solid-state substrate, a method of manufacturing said micro cavity and method of controlling a resonance frequency of the micro cavity.

### BACKGROUND OF THE INVENTION

Color centers in solid state materials are considered as the most promising route towards a hardware platform for future quantum internet applications. One of the most challenging engineering aspects is the optimization of the extraction efficiency of useful single photons. Placing the color center in a cavity is the most common way to increase this extraction efficiency.

Open micro cavities around a piece of solid-state material and containing a color center are described, for instance, in "Resonant Excitation and Purcell Enhancement of Coherent Nitrogen-Vacancy Center Coupled to a Fabry-Perot Micro-Cavity" by M. Ruf.

The main drawbacks of these implementations are the macroscopic dimensions of the optical fiber that has to be positioned, in an environment that suffers from mechanical vibrations caused by the cryostat. This makes it very difficult to reach the required position stabilities of < 50 picometer (pm) Root Mean Square (RMS).

The mechanical stability can be improved by reducing the dimensions of the movable components and by mechanically connecting the movable components to the solid-state material containing the color centers, using micro-electromechanical systems (MEMS) technology. This concept has been described in other application fields, for example tunable VCSELs, as for example in "Integrated MEMS-Tunable VCSELs Using a Self-Aligned Reflow Process" by B. Kögel, and quantum dots, as for example in "A gated quantum dot strongly coupled to an optical microcavity" by D. Najer.

Thus, an implementation of a cavity that circumvents the several issues found in current state-of-the-art implementations is needed.

### SUMMARY OF THE INVENTION

According to a first aspect of the invention, it is provided a micro-electromechanical system, MEMS, based micro cavity for color centers in a solid-state substrate comprising a MEMS structure, a first mirror, a solid-state substrate comprising an embedded color center; and a second mirror located opposite to the first mirror, wherein the solid-state substrate is located between the first mirror and the second mirror, at least one of the first mirror and the second mirror comprises a curved surface, and the MEMS structure comprises an actuator arranged to move the first mirror towards to or away from the second mirror to adjust the length of the micro cavity thereby controlling a resonance frequency of the micro cavity.

This allows to improve the performance of the color center. A micro cavity stimulates the emission of light that matches the resonance frequency of the micro cavity. By providing a micro cavity with a mirror that can be moved using a MEMS structure, the resonance frequency of the micro cavity can be adjusted to match the frequency of the color center with a system robust to mechanical vibrations due to the MEMS structure used to move the mirror. In this way, in the so called "weak coupling regime" the fraction of photons that can be used for quantum experiments (the Zero Phonon Line or ZPL photons) is increased. At the same time the photons will preferably be emitted in the direction of the optical modes of the cavity, instead of in an arbitrary direction. Both aspects improve the extraction efficiency of useful single photons.

There are multiple ways to embed a color center in an optical micro cavity, mainly depending on the type of cavity, like for example a Fabry Perot cavity, a photonic crystal nanobeam cavity or a whispering gallery mode cavity. Due to the sensitivity of some of the color centers to the charge environment on the surface of the substrate they are in, usually it is required to position the color center at least several hundreds of nanometers (nm), up to a few micrometers from the substrate surface. This excludes most of the cavity types, leaving the Fabry Perot (micro) cavity as the best option, thought other micro cavities might be used.

In practice it is required to tune the micro cavity to the resonance frequency of the color center, which is done by changing the length of the cavity, by moving one of the mirrors. The usual requirement on the resolution and mechanical stability of this movement are at the level of 1 picometer (pm) to 10 pm. Particularly the mechanical stability requirement is very difficult to achieve, especially in the environment of a cryostat that is cooled by a pulse tube or Gifford-McMahon (GM) cryocooler.

Known Fabry Perot micro cavities for color centers are based on the concept that one of the mirrors is at the face of an optical fiber, that can be moved using piezo stages. The mechanical dimensions of both the optical fiber and the piezo stages result in relatively large systems (more than tens of millimeters) that are inherently sensitive to external vibrations. For that reason, a MEMS based moving mirror, and that is directly connected to the solid state substrate, for instance via struts or leaf springs, allows a mechanical design that can have high mechanical resonance frequencies (10 Kilohertz (kHz) - 100 kHz). These high mechanical resonance frequencies greatly reduce the sensitivity to mechanical vibrations of the system.

The second mirror may be also arranged to move towards to or away from the first mirror. By moving both mirrors together, the position of the nodes and antinodes of the electromagnetic field can be adjusted, enabling maximization of the electromagnetic field strength at the location of the color center.

The solid-state substrate may comprise a further MEMs structure arranged to apply a mechanical force on the solid-state substrate such that the solid-state substrate bends thereby adjusting the refractive index of the solid-state substrate along a certain direction, to compensate a potential birefringence effect.

The actuator may comprise a plurality of electrodes arranged to adjust an electrostatic field causing the first mirror to move towards to or away from the second mirror. This is a very efficient way of implementing the actuator.

The first mirror may be formed on a front surface of the MEMS structure facing the solid-state substrate.

The solid-state substrate may comprise at least one of a diamond, silicon carbide, and silicon. These are suitable materials for efficiently embedding color centers.

A front surface of the solid-state substrate facing the first mirror may comprise an antireflective coating.

Without an antireflective coating, reflections will occur inside the micro cavity (in both directions) on the interface between the solid-state substrate and the air (or vacuum). The result is that the system will behave like 2 cavities in series, resulting in 2 different tuning sensitivities etc. With an antireflective coating these internal reflections are eliminated, making the system behave like a single cavity.

The micro cavity may comprise a bonding element connecting the solid-state substrate and the micro-electromechanical semiconductor structure. When the stroke of the moving mirror is at least half the optical wavelength, there is no need for an additional control over the cavity length. The bonding element enables separate production of the substrate with the color center and the substrate with the MEMS structure. This avoids compatibility issues in the processing steps and increases the yield when only pre-qualified parts will be bonded together,

The bonding element may be made of at least one of indium and gold. This is a suitable material for the bonding element.

The first mirror may comprise a hybrid Bragg mirror and/or the second mirror may comprise a Bragg mirror. These are efficient and well-known mirror implementations.

The micro cavity may further comprise tuning means to tune the embedded color center to have a certain resonance frequency.

A rear surface of the solid-state substrate may comprise a curved shape, the second mirror may comprise a curved surface and may be formed by adding a coating over the curved shape. The curved or non-flat shape of the rear surface may further be a semi-sphere shape or any other kind of suitable shape. This allows to efficiently manufacture the curved mirror.

The coating may comprise a plurality of curved layers wherein each of the plurality of curved layers may comprise at least one of silicon dioxide and tantalum pentoxide. This allows to efficiently form the second mirror with a curved surface during a manufacturing process. This also provides a highly reflective second mirror.

According to a second aspect of the invention, a method of manufacturing a micro cavity as described above is provided, the method comprising the steps of providing a micro-electromechanical semiconductor structure comprising a first mirror; providing a solid-state substrate comprising an embedded color center; and forming a second mirror opposite to the first mirror; wherein the solid-state substrate is between the first mirror and the second mirror, at least one of the first mirror and the second mirror comprises a curved surface, and the MEMS comprises an actuator arranged to move the first mirror towards to or away from the second mirror to control a resonance frequency of the micro cavity by adjusting a length of the micro cavity. This is a very efficient way of manufacturing the micro cavity.

According to another aspect of the invention, a method of controlling a resonance frequency of a micro cavity as above described by adjusting a length of the micro cavity, is provided, the method comprising the steps of determining a resonance frequency of the color center embedded in the solid-state substrate; and controlling the actuator to move the first mirror towards to or away from the solid-state substrate to adjust the length of the micro cavity such that a resonance frequency of the micro cavity is substantially equal to the determined resonance frequency of the color center.

### BRIEF DESCRIPTION OF THE DRAWINGS

The invention will be described further with respect to embodiments shown in the drawings.
FIG. 1 shows schematically a micro-electromechanical system (MEMS) based micro cavity according to an embodiment of the disclosure.
FIG. 2 shows schematically a micro-electromechanical system (MEMS) based micro cavity according to another embodiment of the disclosure.
FIG. 3A shows schematically the MEMS based micro cavity of FIG. 1 and FIG. 3B shows a section cut of FIG. 3A illustrating an actuator according to an embodiment of the disclosure.
FIGs. 4A and 4B show schematically a solid-state substrate comprising an embedded color center and a further MEMS structure to adjust a refractive index of the solid-state substrate.
Fig. 5A shows a flowchart of a method of manufacturing a micro cavity according to an embodiment of the invention.
Fig. 5B shows a flowchart of a method of controlling a resonance frequency of a micro cavity by adjusting a length of the micro cavity according to an embodiment of the invention.

### DESCRIPTION

The following is a description of certain embodiments of the invention, given by way of example only and with reference to the figures. It is also to be understood that the terminology used herein is for the purpose of describing particular aspects only and is not intended to be limiting.

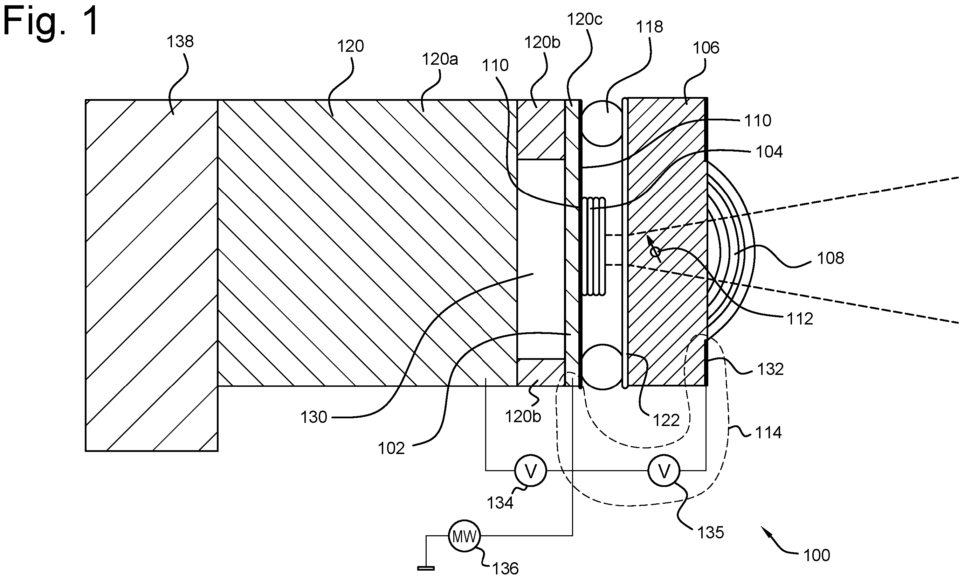

Fig. 1 shows a micro-electromechanical system, MEMS, based micro cavity 100 for color centers in a solid-state substrate according to an embodiment of the invention. The micro cavity 100 shown in Fig. 1 comprises a MEMS structure 120, a first mirror 104, a solid-state substrate 106 and a second mirror 108.

The solid-state substrate 106 may comprise more than one embedded color centers. As show in Fig. 1, the second mirror 108 is located opposite to the first mirror 104 and the solid-state substrate 106 is located between the first mirror 104 and the second mirror 108. The first mirror 104 of Fig, 1 comprises a flat surface, the second mirror 108 comprises a curved surface and the MEMS structure 120 comprises an actuator 110 which is arranged to move the first mirror 104 towards to or away from the second mirror 108. This allows to adjust the length of the micro cavity 100. In this way, the resonance frequency of the micro cavity 100 can be controlled. For instance, by moving the first mirror 104 away from the second mirror 108, the length of the micro cavity 100 is increased and thereby the resonance frequency of the micro cavity 100 is adjusted. In the embodiment of Fig. 1, the electrostatic actuator 110 is made between the movable mirror and the MEMS substrate. In that way this actuator can apply attractive forces, resulting in an increase in distance between the mirrors. The electrostatic actuator may be realized between the movable mirror and the diamond substrate. In that case the actuation of the actuator may result in a reduction of the cavity length. The color center 112 can be tuned to a certain frequency by using the voltage source 135.

Fig. 1 shows an embodiment wherein the second mirror 108 is curved and the first mirror 104 is moveable. However, this is a non-limiting example, and other combinations are covered by the invention. For instance, the first mirror 104 may comprise a curved surface and the second mirror 108 may comprise a flat surface such that the curved mirror is the one configured to move towards to or away from the flat mirror. Alternatively, both the first mirror 104 and the second mirror 108 may comprise a curved surface. Any combination of flat and curved first and second mirrors is possible as far as at least one of the first and second mirrors comprises a curved surface. Also, the second mirror 108 may also be configured to move towards to and away from the first mirror 104.

As said, Fig. 1 shows a color center 112 in a solid-state material, namely in solid-state substrate 106. For instance, the solid-state substrate 106 comprising the embedded color center 112 may be implemented as a Nitrogen-vacancy (NV) center in diamond, or as the V2 center in silicon carbide (SiC) or as color centers in silicon.

The color center 112 in Fig. 1 will be placed between 2 highly reflective mirrors, namely the first mirror 104 and the second mirror 108, that together form the optical micro cavity 100 which may have a length between 1 and 100 micrometers (µm), preferably between 3 and 20 µm. However, the optical micro cavity 100 may have any other suitable length. The optical micro cavity 100 requires at least one of the first mirror 104 and the second mirror 108 to be curved.

In an embodiment, the curved mirror, namely the first or the second mirror, can be made, for instance, with very high quality using Focused Ion Beam (FIB) milling, to define the shape in the solid-state substrate 106 with the embedded color center 112, or with any other suitable technique.

The reflective coating can then easily be applied with standard coating techniques for dielectric mirrors. The first mirror 104 in Fig. 1 is a flat mirror and is able to move, preferably over at least the distance of half the optical wavelength of the color center, in order to control the resonance frequency of the micro cavity 100. The movable mirror (the first mirror 104 in Fig. 1) can be either manufactured directly on top of the substrate of the MEMS structure 120, or manufactured as a separate component that will be attached to the MEMS structure 120 during one of the final steps of the production process of said MEMS structure 120.

As said, instead of having one of the two first and second mirrors fixed, at the cost of added complexity, it is possible to have both first and second mirrors movable using another MEMS structure. This will add the option to control the axial position of the electromagnetic field inside the micro cavity 100. In this way it becomes possible to let the actual position of the color center 112 coincide with the maximum of the electromagnetic field strength created inside of the micro cavity 100 by the color center 112, and as such optimizing the desired physical effects of the micro cavity 100.

As said, this allows to improve the performance of the color center. A micro cavity stimulates the emission of light that matches the resonance frequency of the micro cavity. By providing a micro cavity with a mirror that can be moved using a MEMS structure, the resonance frequency of the micro cavity can be adjusted to match the frequency of the color center with a system robust to mechanical vibrations due to the MEMS structure used to move the mirror. In this way, in the so called "weak coupling regime" the fraction of photons that can be used for quantum experiments (the Zero Phonon Line or ZPL photons) is increased. At the same time the photons will preferably be emitted in the direction of the optical modes of the cavity, instead of in an arbitrary direction. Both aspects improve the extraction efficiency of useful single photons.

The moving mirror may have a diameter in the order of 10 micrometers. The moving mirror may have a diameter of at least 2 micrometer. Preferably, the moving mirror may have a diameter between 5 and 20 micrometers. However, the moving mirror may have any suitable diameter.

The actuator 110 may comprises a plurality of electrodes 116 arranged to adjust an electrostatic field causing the first mirror 104 to move towards to or away from the second mirror (108).

In Fig. 1, the first mirror 104 is formed on a front surface 102 of the MEMS structure 120 facing the solid-state substrate 106. The front surface of the solid-state substrate 106 facing the first mirror 104 comprises an antireflective coating 122. The antireflective coating 122 may comprise a thickness of 99.5 nanometers. However, the antireflective coating 122 may comprise any other suitable thickness. The antireflective coating 122 may comprise a refractive index n of 1.6. However, the antireflective coating 122 may comprise any other suitable refractive index. However, antireflective coating 122 is an optional feature and the solid-state substrate 106 may comprise no antireflective coating 122.

The thickness of the antireflective coating depends on the refractive index of the coating. With a refractive index of 1.6, a suitable thickness may be 637/(4 x 1.6) = 99.5 nm. The optimal refractive index is equal to square root of the refractive index of the substrate. In case of diamond, with a refractive index of 2.4 (for 637 nm light) the optimal refractive index of the AR coating will be 1.56. Thus, the refractive index might be between 1.5 and 1.6, resulting in a thickness between 99 and 106 nm.

The first and the second mirror may comprise a coating having a low reflectivity in green, to allow optical control of the color center using non resonant light. The first mirror 104 may comprise a thickness depending on the combination of high and low refractive materials and the number of bilayers. In case of alternating silicon dioxide (SiO2) and tantalum pentoxide (Ta2O5) layers, the layers might be 109.3 nm (for the SiO2 layer) and 75.12 nm (for the Ta2O5). On top of this more layers may be added to tune the response for green. A typical mirror stack may be between 2 and 3 micrometers in thickness. By using a hybrid coating (only applicable for mirror 104) the stack thickness might be reduced by about 0.5 micrometer.

However, the first mirror 104 may comprise any other suitable thickness. The first mirror 104 may have a reflectivity of almost 1. However, the first mirror 104 may comprise any other suitable reflectivity. The first mirror 104 may comprise a first metal coating and over it, the stack of layers (for instance 10 layers) wherein the metal coating is then one closer to the surface of the MEMS structure 120.

The second mirror 108 may comprise a thickness depending on similar parameters as the first mirror, taking into account that the second mirror cannot be a hybrid one with a metal layer and that the target reflectivity may be lower. However, the second mirror 108 may comprise any other suitable thickness. The second mirror 108 may comprise a reflectivity between 0.996 and 0.999. However, the second mirror 108 may comprise any other suitable reflectivity. The second mirror 108 may comprise a plurality of layers of different or the same material. For instance, the second mirror 108 may comprise a stack of at least 15 layers wherein the first and the third layer have a thickness of 109.3 nanometers and are made of silicon dioxide and the second and the fourth layer have a thickness of 75.12 nanometers and are made of tantalum pentoxide, wherein the first layer is the one closer to the solid-state substrate 106. However, the second mirror 108 may comprise any suitable number of layers and those layers may have any suitable thickness and composition.

The second mirror 108 may have a diameter within the same ranges as explained for the first mirror, or any other suitable diameter. The radius of curvature R of the second mirror 108 may be between 3 and 100 micrometers or may be any other suitable value. The sag (height difference) of the second mirror 108 may be 0.45 micrometers or may be any other suitable value.

As said, the solid-state substrate 106 may comprise at least one of a diamond, silicon carbide, and silicon. Thought the solid-state substrate 106 may comprise any other suitable material. The solid-state substrate 106 may comprise a thickness between 2 and 15 micrometers. However, the solid-state substrate 106 may comprise any other suitable thickness.

Furthermore, the micro cavity 100 of Fig. 1 comprises a bonding element 118 that connects the solid-state substrate 106 and the micro-electromechanical structure 120. The bonding element 118 shown in Fig. 1 may be made of at least one of indium and gold. However, the bonding element 118 may be made of any other suitable material. The bonding element 118 shown in Fig. 1 comprises a spheric shape. However, the bonding element 118 may comprise any other suitable shape that allows to connect the solid-state substrate 106 and the micro mechanical semiconductor structure 120.

As said, in a possible embodiment, the first mirror 104 and/or the second mirror 108 may comprise a hybrid Bragg mirror. However, the first mirror 104 and/or the second mirror 108 may comprise any other kind of suitable mirror.

The rear surface of the solid-state substrate 106 of Fig. 1 comprises a semi-sphere shape and the second mirror 108 has been formed by adding a coating over the semi-sphere shape. The coating may comprise a plurality of curved layers wherein each of the plurality of curve layers may comprise at least one of silicon dioxide and tantalum pentoxide.

The MEMs structure 120 comprises a first part 120a, a second part 120b and a third part 120c. The first part 120a and the third part 120c may be made of silicon -. Thought first part 120a and the third part 120c of the MEMs structure 120 may comprise any other suitable material. The first part 120a of the MEMs structure 120 may comprise a thickness of several hundreds of micrometers, typical between 250 and 800 micrometers. However, the first part 120a of the MEMs structure 120 may comprise any other suitable thickness. The MEMs structure further comprises a second part 120b that connects the first part 120a and the third part 120c and may be made of buried silicon dioxide of a Silicon on Insulator (SOI) wafer and comprise a thickness between 1 and 5 micrometers. However, the third part 120c may be made of any suitable material and comprise any suitable thickness. The MEMs structure 120 comprises an air gap 130 with a minimal thickness of 1 micrometer to allow a minimal stroke of the actuator 110 of at least half the optical wavelength.

The micro cavity 100 comprises tuning means 114 to tune the embedded color center 112 to have a certain resonance frequency. For instance, the tunning means 114 may comprise electrodes 132 to tune the resonance frequency of the color center 112 by Stark tuning. However, the tunning means may be implemented in any other suitable way allowing to tune the embedded color center 112 to have a certain resonance frequency. The electrodes 132 of the tunning means 114 may be located at the surface of the solid-state substrate 106 where the second mirror 108 is placed. The tunning means 114 may further comprise voltage source 135 connected between the electrodes 132 and the third part 120c of the MEMs structure 120. The voltage source 135 adjusts the voltage of the electrodes to tune the resonance of the color center 112

Furthermore, the micro cavity 100 may comprise the microwave (MW) generator 136 arranged to generate an alternating current signal (typically for the color center of around 2.8 Gigahertz (GHz) preferably in the range of 1 - 10 GHz). The purpose of the MW signal is to control the electron spin. In that way the MW signal is used to apply single qubit gates. The same structures and hardware as being used for the MW generation can also be used to generate frequencies in the MHz range (RF or Radio Frequency signals). These signals can be used to control the nuclear spins of ¹³C atoms that are always present in the diamond (mostly ¹²C).

Finally, Fig. 1 shows a cold finger 138 used to keep the color center at cryogenic temperature if needed.

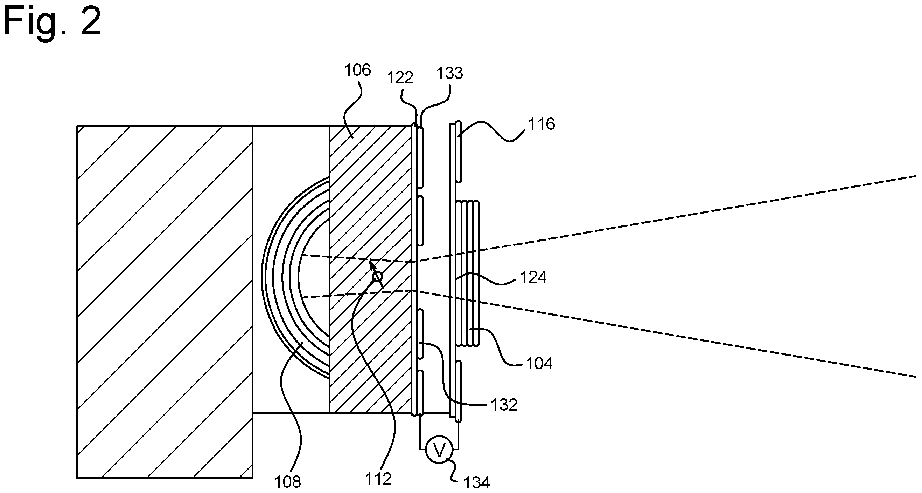

Fig. 2 shows an alternative configuration of Fig. 1 wherein the optical access to the color center is now via the flat mirror 104 instead of the curved mirror. So now the curved mirror 108 is the one with the highest reflectivity and might be a hybrid one (combination of metal and dielectric coating). The MEMS structure 124 is now not fabricated as a separate part that is bonded as one of the last steps of the production to the diamond. This time the MEMS part is directly deposited on top of the diamond substrate 106. So after deposition of the AR coating 122 and the electrodes 132 and 133 on top of the diamond, a sacrificial layer has to be deposited (not depicted). On top of this sacrificial layer the MEMS structure will be made. Due to the fact that silicon is not transparent for 637 nm light, the MEMS elements should be made from another material like Si₃N₄ (silicon nitride). On top of the Si₃N₄ the flat mirror 104 can be deposited. Due to the fact that Si₃N₄ is not electrically conductive, additional electrodes 116 are needed for the electrostatic actuation. In this case a DC voltage over the electrodes at both sides of the air gap can be applied with voltage source 134. Which will result in a movement of the flat mirror towards the substrate 106 and as such will give a reduction of the cavity length.

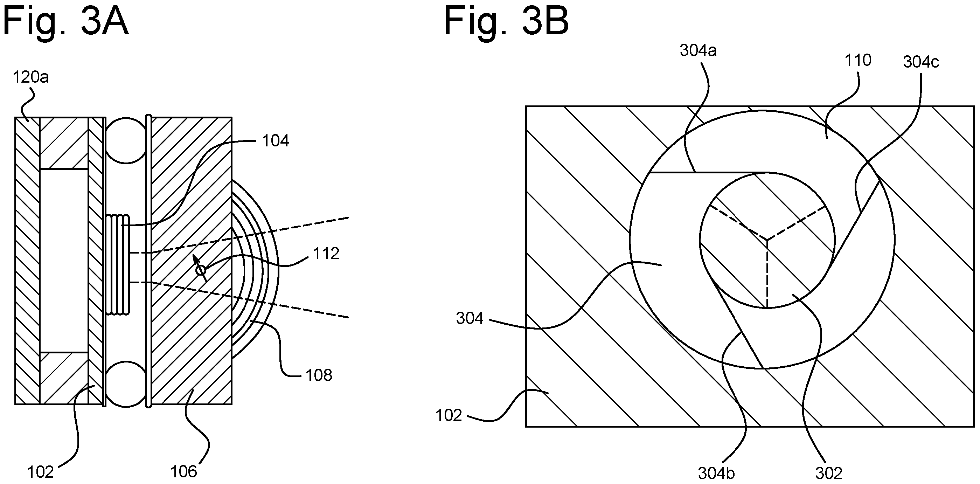

FIG. 3A shows schematically the MEMS based micro cavity 100 of FIG. 1 and FIG. 3B shows a section cut of FIG. 3A illustrating an actuator 110 according to an embodiment of the disclosure.

The actuator 110 of Fig. 3B comprises moveable membrane 302 arranged to support the first mirror 104 on top and a second part 304 surrounding the membrane 302 and comprising a first strut 304a, a second strut 304b and a third strut 304c. The moveable membrane 302 should be stiff. The movement comes from the struts 304 that can be bend in order to support the intended piston movement of the membrane 302.

The basic operating principle of the capacitive actuator 110 is as follows. The freestanding membrane 302 is displaced by a voltage between one electrode on the membrane 302 and one on the underlying substrate 120a which is part of the MEMS structure 120. This displacement can be used to move the first mirror 104.

The struts 304 are flexible elements that by bending in the elastic regime allow a movement of the membrane 302 in a controlled way. Each strut 304 only fixes one degree of freedom (DOF). The shown arrangement in Fig. 3B of 3 struts so fixates 3 DOF (the two lateral translations and the rotation around the optical axis). The movements that are still allowed are the intended piston movement and the tip and tilt of the membrane 302, These last 2 are optional, but by having full control over them the membrane 302 can be adjusted to be exactly perpendicular to the optical axis.

For this reason, the area of the membrane 304 in Fig. 3B can be divided in 3 sections (dotted lines). By an individual control of the actuator force on each of the 3 sections, the 3 remaining DOF can be controlled.

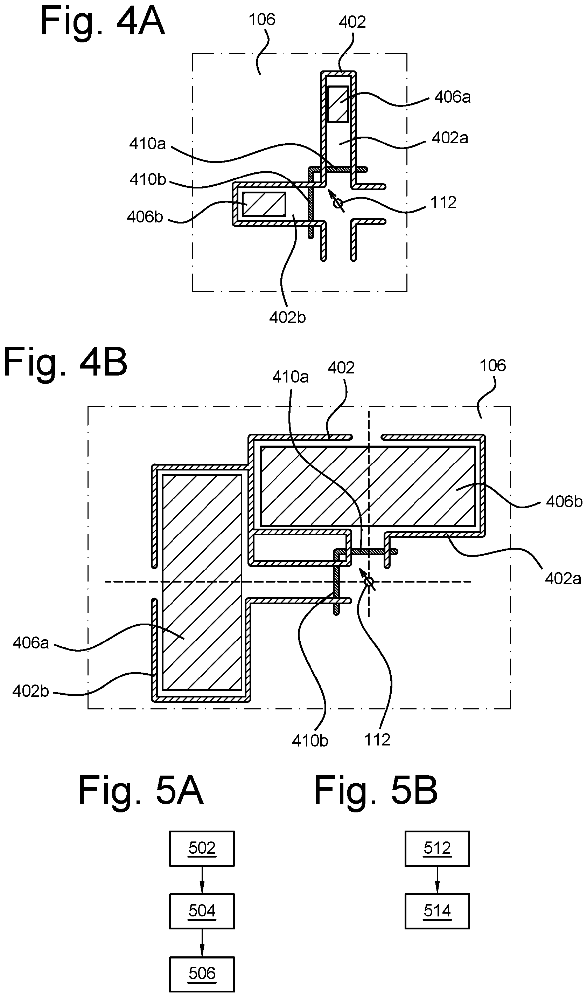

Fig. 4A and 4B show a solid-state substrate 106 comprising a further MEMs structure arranged to apply a mechanical force on the solid-state substrate 106 such that the solid-state substrate 106 bends thereby adjusting the refractive index of the solid-state substrate 106 in a certain direction in order to compensate a birefringence effect. FIG. 4A shows a section cut of the solid-state substrate 106 comprising an embedded color center 112. The solid-state substrate 106 comprises a slit 402 formed by a first arm 402a and a second arm 402b substantially perpendicular to the first arm 402a. The first arm 402a comprises a first electrode 406a and the second arm 402b comprises a second electrode 406b.

The solid-state substrate 106 comprises further a supporting structure 410a and 410b to prevent out of plane displacement of the part of the solid-state substrate 106 where the color center is located. This part holds one of the mirrors and we want to limit the impact of the force applied on electrodes 406a and 406b on the length of the cavity.

FIG. 4B shows a section cut of a different embodiment of the solid-state substrate 106 comprising an embedded color center 112. The solid-state substrate 106 comprises a slit 402 formed by a first arm 402a and a second arm 402b substantially perpendicular to the first arm 402a. The first arm 402a comprises a first electrode 406a and the second arm 402b comprises a second electrode 406b.

The solid-state substrate 106 comprises further an optional supporting structure 410a and 410b to prevent vertical displacement as explained above.

Fig. 5A shows a flowchart of a method of manufacturing a micro cavity according to an embodiment of the invention. The method of Fig. 5A comprises a first step 502 of providing a micro-electromechanical semiconductor structure 120 comprising a first mirror 104, a second step of providing a solid-state substrate 106 comprising an embedded color center 112, and a third step 506 of forming a second mirror 108 opposite to the first mirror 104, wherein the solid-state substrate 106 is provided between the first mirror 104 and the second mirror 108, at least one of the first mirror 104 and the second mirror 108 comprises a curved surface, and the MEMS structure 120 comprises an actuator 110 arranged to move the first mirror 104 towards to or away from the second mirror 108 to control a resonance frequency of the micro cavity 100 by adjusting a length of the micro cavity.

Fig. 5B shows a flowchart of a method of controlling a resonance frequency of a micro cavity by adjusting a length of the micro cavity according to an embodiment of the invention. The method of Fig. 5B comprises a first step 512 of determining a resonance frequency of the color center 112 embedded in the solid-state substrate 106, and a second step 514 of controlling the actuator 110 to move the first mirror 104 towards to or away from the second mirror 108 to adjust the length of the micro cavity 100 such that a resonance frequency of the micro cavity 100 is substantially equal to the determined resonance frequency of the color center 112.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

## Claims

1. A micro-electromechanical system, MEMS, based micro cavity (100) for color centers in a solid-state substrate comprising:
- a MEMS structure (120);
- a first mirror (104);
- a solid-state substrate (106) comprising an embedded color center (112); and
- a second mirror (108) located opposite to the first mirror (104),
wherein the solid-state substrate is located between the first mirror and the second mirror, at least one of the first mirror and the second mirror comprises a curved surface, and the MEMS structure comprises an actuator (110) arranged to move the first mirror (104) towards to or away from the second mirror (108) to adjust a length of the micro cavity (100) thereby controlling a resonance frequency of the micro cavity.

2. The micro cavity (100) according to any of the preceding claims, wherein the second mirror (108) is also arranged to move towards to or away from the first mirror (104).

3. The micro cavity (100) according to any of the preceding claims, wherein the solid-state substrate (106) comprises a further MEMs structure arranged to apply a mechanical force on the solid-state substrate such that the solid-state substrate bends thereby adjusting a refractive index of the solid-state substrate to compensate a birefringence effect.

4. The micro cavity (100) according to any of the preceding claims, wherein the actuator (110) comprises a plurality of electrodes (116) arranged to adjust an electrostatic field causing the first mirror (104) to move towards to or away from the second mirror (108).

5. The micro cavity according to any of the preceding claims, wherein the first mirror (104) is formed on a front surface of the MEMS structure facing the solid-state substrate (106).

6. The micro cavity according to any of the preceding claims, wherein the solid-state substrate (106) comprises at least one of a diamond, silicon carbide, and silicon.

7. The micro cavity according to any of the preceding claims, wherein a front surface of the solid-state substrate (106) facing the first mirror (104) comprises an antireflective coating.

8. The micro cavity according to any of the preceding claims, further comprising a bonding element (118) connecting the solid-state substrate and the micro-electromechanical semiconductor structure (120).

9. The micro cavity according to claim -8, wherein the bonding element (118) is made of at least one of indium and gold.

10. The micro cavity according to any of the preceding claims, wherein the first mirror (104) comprises a hybrid Bragg mirror and the second mirror (108) comprises a Bragg mirror.

11. The micro cavity (100) according to any of the preceding claims, further comprising tuning means (114) to tune the embedded color center to have a certain resonance frequency.

12. The micro cavity according to any of the preceding claims, wherein a rear surface of the solid-state substrate comprises a curved shape, the second mirror (108) comprises a curved surface and is formed by adding a coating over the curved shape.

13. The micro cavity according to claim 12, wherein the coating comprises a plurality of curved layers wherein each of the plurality of curved layers comprises at least one of silicon dioxide and tantalum pentoxide.

14. A method of manufacturing a micro cavity according to any of claims 1-13, the method comprising the steps of:
- providing a micro-electromechanical semiconductor structure;
- providing a first mirror;
- providing a solid-state substrate comprising an embedded color center; and
- providing a second mirror opposite to the first mirror;
wherein the solid-state substrate is located between the first mirror and the second mirror, at least one of the first mirror and the second mirror comprises a curved surface, and the MEMS structure comprises an actuator (110) arranged to move the first mirror (104) towards to or away from the second mirror (108) to control a resonance frequency of the micro cavity by adjusting a length of the micro cavity (100).

15. A method of controlling a resonance frequency of a micro cavity according to any of claims 1-13 by adjusting a length of the micro cavity, the method comprising the steps of:
determining a resonance frequency of the color center embedded in the solid-state substrate; and
controlling the actuator to move the first mirror towards to or away from the second mirror (108) to adjust the length of the micro cavity such that a resonance frequency of the micro cavity is substantially equal to the determined resonance frequency of the color center.
